# EUROPÄISCHE PATENTANMELDUNG

(11) **EP 4 588 407 A1**
(43) Veröffentlichungstag der Anmeldung: **23.07.2025**
(21) Anmeldenummer: 25152257.9
(22) Anmeldetag: 16.01.2025
(51) Int. Cl.: A47J 42/48, A47J 42/46, A47J 42/04, A47J 42/06

(54) **MÜHLE**

(30) Priorität: 16.01.2024 LU 506140
(71) Anmelder: Biernatek, Eduard, 63110 Rodgau (DE)
(72) Erfinder: Biernatek, Eduard, 63110 Rodgau (DE)
(74) Vertreter: Hoffmann, Jürgen

(57) **Zusammenfassung**

Die Erfindung betrifft eine Mühle mit einem Mühlenkörper und mit einem Griffbereich, der dazu ausgebildet ist, während eines Mahlvorganges mit den Fingern eines Armes gegriffen zu werden. Die Mühle weist eine Drehmomentabstützvorrichtung auf, die dazu ausgebildet ist, während des Mahlvorganges an einem von den Fingern verschiedenen Teil desselben Armes anzuliegen. Die Drehmomentabstützvorrichtung ist zerstörungsfrei abnehmbar an dem Mühlenkörper (1) befestigt und/oder deren Ausrichtung und/oder Position relativ zu dem Mühlenkörper (1) ist einstellbar.

## Beschreibung

Die Erfindung betrifft eine Mühle mit einem Mühlenkörper und mit einem Griffbereich, der dazu ausgebildet ist, während eines Mahlvorganges mit den Fingern eines Armes gegriffen zu werden.

Mühlen der eingangs genannten Art sind beispielsweise als Kaffeemühlen oder als Gewürzmühlen bekannt. Sie sind zumeist derart ausgebildet, dass der Benutzer einen Mühlenkörper in einer Hand hält, während er mit der anderen Hand ein Antriebselement, wie beispielsweise eine Handkurbel bedient. Der Mühlenkörper darf sich bei dem Mahlvorgang nicht mitdrehen und muss entsprechend fest gehalten werden. Die Haltearbeit zum Festhalten des Mühlenkörpers, die der Benutzer für einen Mahlvorgang aufwenden muss, hängt insbesondere von der Art, der Beschaffenheit und der Menge des Mahlgutes sowie von der Beschaffenheit des Mahlwerkes ab. Es kann vorkommen, dass eine schwächere Person, beispielsweise ein Kind, Schwierigkeiten hat, den Mühlenkörper für die gesamte Dauer eines Mahlvorganges festzuhalten. Beispielsweise kann es für eine schwächere Person sehr anstrengend sein, eine Portion besonders harter Kaffeebohnen mit einem feinen Mahlgrad zu mahlen.

Aus dem deutschen Gebrauchsmuster DE 20 2014 105 347 U1 ist eine Handmühle zum Zerkleinern von Mahlgut, umfassend ein Gehäuse mit einem als Vorratsbehälter ausgebildeten oberen Gehäuseteil und einem als Auffangbehälter ausgebildeten unteren Gehäuseteil, welche mittels einer Schraubverbindung verbindbar sind, bekannt. Die Handmühle weist eine mit einer Drehspindel verbindbare Kurbel auf, die bei Nichtgebrauch an einer Haltelasche an der Außenseite des unteren Gehäuseteils vorübergehend festgelegt werden kann.

Aus dem deutschen Gebrauchsmuster DE 20 2015 103 541 U1 ist eine Kaffeemaschine mit einem Kaffeemaschinengehäuse, einer integrierten Kaffeemühle zum Mahlen von Kaffeebohnen zu Kaffeemehl und mit einer Brüheinheit zum Brühen von Kaffee. Die Kaffeemühle weist einen eine erste Motordrehachse aufweisenden Elektromotor mit einem Motorgehäuse zum rotierenden Antreiben eines Mahlwerks auf. Das Motorgehäuse ist in einer das Motorgehäuse vollumfänglich umschließenden Schalldämmhülle angeordnet, wobei eine Drehmomentstütze das von dem Elektromotor erzeugte Drehmoment an der Schalldämmhülle abstützt.

Es ist die Aufgabe der vorliegenden Erfindung, eine Mühle der eingangs genannten Art anzugeben, die mit einer geringeren Kraftanstrengung bedienbar ist.

Die Aufgabe wird durch eine Mühle gelöst, die dadurch gekennzeichnet ist, dass die Mühle eine Drehmomentabstützvorrichtung aufweist, die dazu ausgebildet ist, während des Mahlvorganges an einem von den Fingern verschiedenen Teil desselben Armes (dessen Finger den Griffbereich gegriffen haben) anzuliegen, wobei die Drehmomentabstützvorrichtung zerstörungsfrei abnehmbar an dem Mühlenkörper befestigt ist und/oder wobei die Ausrichtung und/oder die Position der Drehmomentabstützvorrichtung relativ zu dem Mühlenkörper einstellbar ist.

Die Erfindung hat den ganz besonderen Vorteil, dass der Benutzer die erfindungsgemäße Mühle während eines Mahlvorganges mit einer geringeren Haltekraft, insbesondere frei und ohne Abstützung an einer externen Struktur, wie beispielsweise einer Wand oder einem Tisch, festhalten kann, ohne dass die Gefahr besteht, dass beispielsweise ein Mühlenkörper, an dem der Griffbereich ausgebildet ist, während des Mahlvorganges mitrotiert. Bei der erfindungsgemäßen Mühle wird ein Mitrotieren mittels der Drehmomentabstützvorrichtung verhindert.

Die Drehmomentabstützvorrichtung kann insbesondere dazu ausgebildet sein, während des Mahlvorganges wenigstens teilweise am Unterarm des Armes anzuliegen, dessen Finger den Griffbereich gegriffen haben. Alternativ oder zusätzlich kann die Drehmomentabstützvorrichtung dazu ausgebildet sein, während des Mahlvorganges wenigstens teilweise an der Handwurzel des Armes, dessen Finger den Griffbereich gegriffen haben, und/oder am Handgelenk des Armes, dessen Finger den Griffbereich gegriffen haben, oder im Mittelhandknochenbereich des Daumens des Armes, dessen Finger den Griffbereich gegriffen haben, anzuliegen.

Die Drehmomentabstützvorrichtung kann hierfür vorteilhaft in radialer Richtung eine Länge im Bereich von 1 cm bis 25 cm, insbesondere 5 cm bis 25 cm, aufweisen oder kann in einer längenverstellbaren Ausführung auf eine Länge im Bereich von 1 cm bis 25 cm, insbesondere 5 cm bis 25 cm, einstellbar sein.

Bei einer vorteilhaften Ausführung ist der Griffbereich an einem Mühlenkörper der Mühle ausgebildet. Der Mühlenkörper kann ein Gehäuse und ein Mahlwerk aufweisen.

Bei einer ganz besonders vorteilhaften Ausführung weist die Drehmomentabstützvorrichtung ein an dem Mühlenkörper angeordnetes, insbesondere mittels einer Befestigungsvorrichtung befestigtes, Ende sowie ein freies Ende auf. Das freie Ende kann beispielsweise dazu ausgebildet sein, an dem Unterarm anzuliegen, dessen Finger den Griffbereich gegriffen haben. Das andere Ende kann, insbesondere mittels einer Befestigungsvorrichtung, beispielsweise reibschlüssig und/oder formschlüssig derart an dem Mühlenkörper befestigt sein, dass der Mühlenkörper gegen eine Mitrotation während eines Mahlvorganges gesichert ist. Eine solche Ausführung kann insbesondere derart ausgebildet sein, dass die Drehmomentabstützvorrichtung zerstörungsfrei demontiert werden kann, wenn sie nicht benötigt wird, und dass sie im Bedarfsfall wieder befestigt werden kann.

Die Drehmomentabstützvorrichtung kann alternativ oder zusätzlich derart ausgebildet sein, dass die Drehmomentabstützvorrichtung oder wenigstens ein Teil der Drehmomentabstützvorrichtung wahlweise in eine Gebrauchsstellung oder eine Aufbewahrungsstellung überführbar ist. Beispielsweise kann die Drehmomentabstützvorrichtung derart an dem Mühlenkörper, insbesondere einem Gehäuse des Mühlenkörpers, befestigt sein, dass der Benutzer die Drehmomentabstützvorrichtung oder wenigstens einen Teil der Drehmomentabstützvorrichtung durch Ausklappen in die Gebrauchsstellung und durch Einklappen in die Aufbewahrungsstellung überführen kann.

Darüber hinaus ist es alternativ auch möglich, dass ein Bauteil des Mühlenkörpers, insbesondere ein Gehäuse des Mühlenkörpers, mit der Drehmomentabstützvorrichtung oder zumindest mit einem Bestandteil der Drehmomentabstützvorrichtung gemeinsam einstückig hergestellt ist.

Besonders vorteilhaft kann vorgesehen sein, dass die Ausrichtung und/oder die Position der Drehmomentabstützvorrichtung relativ zu dem Mühlenkörper einstellbar ist. Alternativ oder zusätzlich kann die Drehmomentabstützvorrichtung längenverstellbar, insbesondere teleskopierbar, ausgebildet sein. Diese Ausführungen haben den ganz besonderen Vorteil, dass der Benutzer die erfindungsgemäße Mühle individuell auf seine Anatomie einstellen kann.

Wie bereits erwähnt, kann der Mühlenkörper ein Gehäuse aufweisen. Das Gehäuse kann einen Aufnahmeraum für das Mahlgut, beispielsweise für zu mahlende Kaffeebohnen bzw. für ein Gewürz, aufweisen. Außerdem kann in dem Gehäuse ein Mahlwerk angeordnet sein.

Bei einer vorteilhaften Ausführung weist das Gehäuse den Griffbereich auf. Bei einer solchen Ausführung kann die Drehmomentabstützvorrichtung vorteilhaft an dem Gehäuse befestigt sein. Insbesondere kann vorteilhaft vorgesehen sein, dass die Drehmomentabstützvorrichtung zerstörungsfrei abnehmbar an dem Gehäuse befestigt ist. Eine solche Ausführung hat den Vorteil, dass die Drehmomentabstützvorrichtung zerstörungsfrei demontiert werden kann, wenn sie nicht benötigt wird, und im Bedarfsfall wieder an das Gehäuse anmontiert werden kann.

Die Drehmomentabstützvorrichtung kann vorteilhaft reibschlüssig an dem Gehäuse befestigt sein. Beispielsweise kann eine Befestigungsvorrichtung der Drehmomentabstützvorrichtung wenigstens ein Klemmbauteil, insbesondere einen Klemmring oder eine Klemmschelle, aufweisen, welches das Gehäuse umgibt. Zwischen dem Klemmbauteil und dem Gehäuse kann wenigstens ein Elastomerbauteil, insbesondere ein Elastomerring, angeordnet sein. Das Elastomerbauteil sorgt für eine gute Haftreibung und schützt das Gehäuse vor einer Beschädigung. Bei dem Elastomerbauteil kann es sich beispielsweise um einen O-Ring handeln. Das Klemmbauteil kann vorteilhaft eine, insbesondere umlaufende, Nut aufweisen, aus der ein an dem Gehäuse anliegender Teil des Elastomerbauteils ragt. Bei einer ganz besonders vorteilhaften Ausführung sind zwei koaxial angeordnete Elastomerringe, insbesondere O-Ringe, vorhanden.

Die Drehmomentabstützvorrichtung kann alternativ oder zusätzlich formschlüssig befestigt sein. Beispielsweise kann die Drehmomentabstützvorrichtung ein Steckelement aufweisen, das mit einem Gegensteckelement des Mühlenkörpers, insbesondere des Gehäuses des Mühlenkörpers, in Wirkverbindung gebracht werden kann.

Das Gehäuse kann zylinderförmig, insbesondere kreiszylinderförmig, ausgebildet sein. Ganz besonders ergonomisch und besonders stabil ist eine Ausführung, bei der das Gehäuse in einer Querschnittsebene senkrecht zu seiner Längserstreckungsrichtung eine kreisförmige Außenkontur und/oder eine kreisförmige Innenkontur aufweist. Insbesondere ist das Gehäuse einer solchen Ausführung besonders handlich, weil es ergonomisch mit einer Hand umgriffen werden kann, insbesondere wenn der Außendurchmesser im Bereich von 30 mm bis 120 mm, ganz insbesondere im Bereich von 35 mm bis 70 mm oder von 50 mm bis 70 mm, liegt. Insbesondere bei einer Ausführung, bei der das Gehäuse in einer Querschnittsebene senkrecht zu seiner Längserstreckungsrichtung eine kreisförmige Außenkontur aufweist, ist die Drehmomentabstützvorrichtung besonders wirkungsvoll, weil derartige Gehäuse dazu neigen, bei einem Mahlvorgang in der Hand des Benutzers mitzurotieren.

Die Drehmomentabstützvorrichtung ist sehr vorteilhaft, wenn die Außenkontur des Griffbereichs des Mühlenkörpers im Horizontalquerschnitt kreisförmig ist. Es hat sich jedoch gezeigt, dass die Drehmomentabstützvorrichtung auch dann vorteilhaft ist, wenn die Außenkontur des Griffbereichs des Mühlenkörpers im Horizontalquerschnitt nicht kreisförmig, sondern vieleckig, beispielsweise viereckig, ausgebildet ist. Denn auch bei solchen Mühlen besteht das Problem, dass der Mühlenkörper während des Mahlvorganges, insbesondere von Personen, die nur eine durchschnittliche oder sogar unterdurchschnittliche Fingerkraft haben, nicht zuverlässig gehalten werden kann und mitrotiert.

Alternativ oder zusätzlich kann das Gehäuse rohrförmig ausgebildet sein. Eine solche Ausführung hat den besonderen Vorteil, dass sie besonders kompakt und stabil ist. Außerdem kann vorteilhafter Weise eine Einfüllöffnung für das Mahlgut durch eine obere Rohröffnung gebildet sein. Alternativ oder zusätzlich kann eine Ausgabeöffnung durch eine untere Rohröffnung gebildet sein.

Bei einer vorteilhaften Ausführung weist die Mühle eine Antriebswelle auf, die um eine Antriebsachse rotierbar gelagert ist. Beispielsweise kann bei einer solchen Mühle eine Handkurbel an die Antriebswelle angekoppelt sein.

Vorzugsweise ist die Drehmomentabstützvorrichtung zur Abstützung eines in die Antriebswelle eingeleiteten Drehmomentes ausgebildet.

Die Drehmomentabstützvorrichtung kann beispielsweise einen Abstützbügel oder einen Abstützhebel aufweisen, der sich vorzugsweise im Wesentlichen senkrecht zur Antriebsachse erstreckt, was es in besonders effizienter Weise ermöglicht, das bei einem Mahlvorgang in die Antriebswelle eingeleitete Drehmoment über die Drehmomentabstützvorrichtung abzustützen.

Bei einer vorteilhaften Ausführung ist die Antriebswelle einerseits drehfest mit einer Antriebsvorrichtung und andererseits drehfest mit einem Mahlrotor, insbesondere einem Mahlkegel, des Mahlwerks verbunden. Beispielsweise kann die Antriebsvorrichtung die Antriebswelle unmittelbar antreiben. Es ist jedoch auch möglich, dass ein Getriebe treibtechnisch zwischen die Antriebsvorrichtung und die Antriebswelle geschaltet ist.

Die Antriebsvorrichtung kann beispielsweise als Handkurbel ausgebildet sein. Insbesondere kann die Mühle dazu ausgebildet sein, von einem Benutzer mit den Fingern einer Hand an dem Griffbereich, insbesondere frei in der Luft und ohne Abstützung an einer Wand oder auf einem Tisch, gehalten zu werden, während der Benutzer mit seiner anderen Hand die Handkurbel betätigen kann.

Alternativ kann die Antriebsvorrichtung einen elektrischen Antriebsmotor aufweisen. Die elektrische Antriebsvorrichtung kann ein dem Antriebsmotor triebtechnisch nachgeschaltetes Getriebe beinhalten. Beispielsweise kann eine solche Antriebsvorrichtung an einer externen Struktur, beispielsweise einer Wand oder an einem Tisch, befestigt sein und eine Ankoppelvorrichtung zum Ankoppeln an die Mühle, insbesondere an die Antriebswelle der Mühle aufweisen. Die Antriebsvorrichtung kann insbesondere derart ausgebildet sein, dass der Benutzer die Mühle während eines Mahlvorganges, insbesondere frei und ohne Abstützung an einer externen Struktur, wie beispielsweise einer Wand oder einem Tisch, an dem Griffbereich halten kann, wobei das von der Antriebsvorrichtung eingeleitete Drehmoment über die Drehmomentabstützvorrichtung abgestützt wird.

Bei einer ganz besonders vorteilhaften Ausführung ist die Ankoppelvorrichtung derart ausgebildet, dass eine drehmomentübertragende Verbindung von dem Benutzer werkzeugfrei hergestellt und wieder gelöst werden kann. Beispielsweise kann die Mühle einen quer zu der Antriebswelle angeordneten Mitnehmerbalken aufweisen. Der Mitnehmerbalken hat die Funktion, mit wenigstens einem Bauteil eines Abtriebselements der elektrischen Antriebsvorrichtung zusammen zu wirken, um ein Drehmoment zu übertragen. Hierzu kann das Abtriebselement beispielsweise eine Gabel mit zwei Zinken aufweisen, die im Ankoppelzustand an dem Mitnehmerbalken anliegen, um ein Drehmoment von dem Abtriebselement der elektrischen Antriebsvorrichtung auf die Antriebswelle zu übertragen.

Bei einer ganz besonders sicher handhabbaren Ausführung ist außer der Drehmomentabstützvorrichtung eine weitere Drehmomentabstützvorrichtung vorhanden. Die weitere Drehmomentabstützvorrichtung ist dazu ausgebildet und angeordnet, während des Mahlvorganges an einem der Finger, die den Griffbereich halten, insbesondere an dem Daumen oder der Daumenspitze der den Griffbereich haltenden Finger, anzuliegen. Eine solche Ausführung hat den ganz besonderen Vorteil, dass das für einen Mahlvorgang eingeleitete Drehmoment zuverlässig sowohl über die Drehmomentabstützvorrichtung als auch über die weitere Drehmomentabstützvorrichtung abgestützt wird. Außerdem hat eine solche Ausführung hat den ganz besonderen Vorteil, dass das für einen Mahlvorgang eingeleitete Drehmoment wenigstens über die weitere Drehmomentabstützvorrichtung abgestützt werden kann, wenn die Drehmomentabstützvorrichtung vorübergehend abmontiert wurde.

Die erfindungsgemäße Mühle kann vorteilhaft als Kaffeemühle zum Mahlen von Kaffeebohnen oder als Gewürzmühle, beispielsweise zum Mahlen von Pfefferkörnern oder Salzkörnern, ausgebildet sein.

Besonders vorteilhaft ist eine Mühle, die wenigstens einen der nachfolgenden Aspekte aufweist:
1. Mühle mit einem Griffbereich (2), der dazu ausgebildet ist, während eines Mahlvorganges mit den Fingern (16) eines Armes (15) gegriffen zu werden, dadurch gekennzeichnet, dass die Mühle eine Drehmomentabstützvorrichtung (10) aufweist, die dazu ausgebildet ist, während des Mahlvorganges an einem von den Fingern (16) verschiedenen Teil desselben Armes (15) anzuliegen.
2. Mühle nach Aspekt 1, dadurch gekennzeichnet, dass die Drehmomentabstützvorrichtung (10) dazu ausgebildet ist, während des Mahlvorganges wenigstens teilweise am Unterarm (14) des Armes (15) anzuliegen.
3. Mühle nach Aspekt 1 oder 2, dadurch gekennzeichnet, dass die Drehmomentabstützvorrichtung (10) dazu ausgebildet ist, während des Mahlvorganges wenigstens teilweise an der Handwurzel des Armes (15) und/oder am Handgelenk des Armes (15) oder im Mittelhandknochenbereich des Daumens des Armes (15) anzuliegen.
4. Mühle nach einem der Aspekte 1 bis 3, dadurch gekennzeichnet, dass der Griffbereich (2) an einem Mühlenkörper (1) der Mühle ausgebildet ist, der ein Mahlwerk aufweist.
5. Mühle nach Aspekt 4, dadurch gekennzeichnet, dass die Drehmomentabstützvorrichtung (10) ein an dem Mühlenkörper (1) angeordnetes Ende sowie ein freies Ende aufweist.
6. Mühle nach Aspekt 4 oder 5, dadurch gekennzeichnet, dass die Ausrichtung der Drehmomentabstützvorrichtung (10) und/oder die Position der Drehmomentabstützvorrichtung (10) relativ zu dem Mühlenkörper (1) einstellbar ist.
7. Mühle nach einem der Aspekte 4 bis 6, dadurch gekennzeichnet, dass der Mühlenkörper (1) ein Gehäuse (3) aufweist.
8. Mühle nach Aspekt 7, dadurch gekennzeichnet, dass das Gehäuse (3) den Griffbereich (2) aufweist.
9. Mühle nach Aspekt 7 oder 8, dadurch gekennzeichnet, dass die Drehmomentabstützvorrichtung (10), insbesondere zerstörungsfrei abnehmbar, an dem Gehäuse (3) befestigt ist.
10. Mühle nach Aspekt 9, dadurch gekennzeichnet, dass die Drehmomentabstützvorrichtung (10) reibschlüssig und/oder formschlüssig an dem Gehäuse (3) befestigt ist.
11. Mühle nach Aspekt 9 oder 10, dadurch gekennzeichnet, dass eine Befestigungsvorrichtung (11) der Drehmomentabstützvorrichtung (10) wenigstens ein Klemmbauteil, insbesondere einen Klemmring, oder eine Klemmschelle (13) aufweist, welches das Gehäuse (3) umgibt.
12. Mühle nach Aspekt 11, dadurch gekennzeichnet, dass zwischen dem Klemmbauteil und dem Gehäuse (3) wenigstens ein Elastomerbauteil, insbesondere ein Elastomerring, angeordnet ist.
13. Mühle nach einem der Aspekte 7 bis 12, dadurch gekennzeichnet, dass das Gehäuse (3) zylinderförmig, insbesondere kreiszylinderförmig, ausgebildet ist.
14. Mühle nach einem der Aspekte 7 bis 13, dadurch gekennzeichnet, dass das Gehäuse (3) rohrförmig ausgebildet ist.
15. Mühle nach einem der Aspekte 7 bis 14, dadurch gekennzeichnet, dass das Gehäuse (3) eine Einfüllöffnung (8) zum Einfüllen von Mahlgut aufweist.
16. Mühle nach Aspekt 14 und 15, dadurch gekennzeichnet, dass die Einfüllöffnung (8) durch eine obere Rohröffnung gebildet ist.
17. Mühle nach einem der Aspekte 7 bis 16, dadurch gekennzeichnet, dass das Gehäuse (3) eine Ausgabeöffnung für das gemahlene Gut aufweist.
18. Mühle nach Aspekt 14 und 17, dadurch gekennzeichnet, dass die Ausgabeöffnung durch eine untere Rohröffnung gebildet ist.
19. Mühle nach einem der Aspekte 1 bis 18, dadurch gekennzeichnet, dass das Gehäuse (3) einen Aufnahmeraum für das zu mahlende Mahlgut umgibt.
20. Mühle nach einem der Aspekte 1 bis 19, dadurch gekennzeichnet, dass die Drehmomentabstützvorrichtung (10) längenverstellbar ausgebildet ist.
21. Mühle nach einem der Aspekte 1 bis 20, dadurch gekennzeichnet, dass die Mühle eine Antriebswelle (4) aufweist, die um eine Antriebsachse (5) rotierbar gelagert ist.
22. Mühle nach Aspekt 21, dadurch gekennzeichnet, dass die Drehmomentabstützvorrichtung (10) einen Abstützbügel (12) oder einen Abstützhebel aufweist.
23. Mühle nach Aspekt 22, dadurch gekennzeichnet, dass sich der Abstützbügel (12) oder Abstützhebel im Wesentlichen senkrecht zur Antriebsachse (5) erstreckt.
24. Mühle nach einem der Aspekte 21 bis 23, dadurch gekennzeichnet, dass die Drehmomentabstützvorrichtung (10) zur Abstützung eines in die Antriebswelle (4) eingeleiteten Drehmomentes ausgebildet ist.
25. Mühle nach einem der Aspekte 21 bis 24, dadurch gekennzeichnet, dass die Antriebswelle (4) einerseits drehfest mit einer Antriebsvorrichtung und andererseits drehfest mit einem Mahlrotor, insbesondere einem Mahlkegel, des Mahlwerks verbunden ist.
26. Mühle nach Aspekt 25, dadurch gekennzeichnet, dass die Antriebsvorrichtung als Handkurbel (6) ausgebildet ist.
27. Mühle nach einem der Aspekte 1 bis 26, dadurch gekennzeichnet, dass die Mühle manuell angetrieben ist.
28. Mühle nach Aspekt 26 oder 27, dadurch gekennzeichnet, dass die Mühle dazu ausgebildet ist, von einem Benutzer mit den Fingern (16) einer Hand an dem Griffbereich (2) gehalten zu werden, während der Benutzer mit seiner anderen Hand die Handkurbel (6) betätigen kann.
29. Mühle nach Aspekt 25, dadurch gekennzeichnet, dass die Antriebsvorrichtung (18) einen elektrischen Antriebsmotor aufweist.
30. Mühle nach einem der Aspekte 1 bis 29, dadurch gekennzeichnet, dass die Mühle eine weitere Drehmomentabstützvorrichtung (17) aufweist.
31. Mühle nach Aspekt 30, dadurch gekennzeichnet, dass die weitere Drehmomentabstützvorrichtung (17) dazu ausgebildet und angeordnet ist, während des Mahlvorganges an einem der den Griffbereich (2) haltenden Finger (16), insbesondere an dem Daumen oder der Daumenspitze der den Griffbereich (2) haltenden Finger, anzuliegen.
32. Mühle nach einem der Aspekte 1 bis 31, dadurch gekennzeichnet, dass die Drehmomentabstützvorrichtung (10) oder wenigstens einen Teil der Drehmomentabstützvorrichtung (10) wahlweise in eine Gebrauchsstellung oder eine Aufbewahrungsstellung, insbesondere durch Ein- bzw. Ausklappen, überführbar ist.
33. Mühle nach einem der Aspekte 1 bis 32, dadurch gekennzeichnet, dass die Mühle als Kaffeemühle ausgebildet ist.
34. Mühle nach einem der Aspekte 1 bis 33, dadurch gekennzeichnet, dass die Mühle als Gewürzmühle ausgebildet ist.
35. Mühle nach einem der Aspekte 1 bis 34, dadurch gekennzeichnet, dass die Mühle wenigstens eines der nachfolgenden Merkmale a bis f aufweist:
   a. die Drehmomentabstützvorrichtung (10) ist reibschlüssig und/oder formschlüssig an dem Gehäuse (3) befestigt,
   b. eine Befestigungsvorrichtung (11) der Drehmomentabstützvorrichtung (10) weist wenigstens ein Klemmbauteil, insbesondere einen Klemmring, oder eine Klemmschelle (13) auf, welches das Gehäuse (3) umgibt,
   c. eine Befestigungsvorrichtung (11) der Drehmomentabstützvorrichtung (10) weist wenigstens ein Klemmbauteil auf, wobei zwischen dem Klemmbauteil und dem Gehäuse (3) wenigstens ein Elastomerbauteil, insbesondere ein Elastomerring, angeordnet ist,
   d. die Drehmomentabstützvorrichtung (10) ist längenverstellbar ausgebildet
   e. die Drehmomentabstützvorrichtung weist in radialer Richtung eine Länge im Bereich von 1 cm bis 25 cm, insbesondere 5 cm bis 25 cm, auf oder ist auf eine Länge im Bereich von 1 cm bis 25 cm, insbesondere 5 cm bis 25 cm, einstellbar,
   f. die Drehmomentabstützvorrichtung (10) oder wenigstens einen Teil der Drehmomentabstützvorrichtung (10) ist wahlweise in eine Gebrauchsstellung oder eine Aufbewahrungsstellung, insbesondere durch Ein- bzw. Ausklappen, überführbar
36. Drehmomentabstützvorrichtung (10) zum Bilden einer Mühle nach einem der Aspekte 1 bis 35.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel einer erfindungsgemäßen Mühle, die insbesondere als Kaffeemühle oder als Gewürzmühle ausgebildet sein kann,
- Fig. 2: das erste Ausführungsbeispiel einer erfindungsgemäßen Mühle bei einem Mahlvorgang,
- Fig. 3: ein zweites Ausführungsbeispiel einer erfindungsgemäßen Mühle, die insbesondere als Kaffeemühle oder als Gewürzmühle ausgebildet sein kann und
- Fig. 4: ein drittes Ausführungsbeispiel einer erfindungsgemäßen Mühle, die insbesondere als Kaffeemühle oder als Gewürzmühle ausgebildet sein kann.

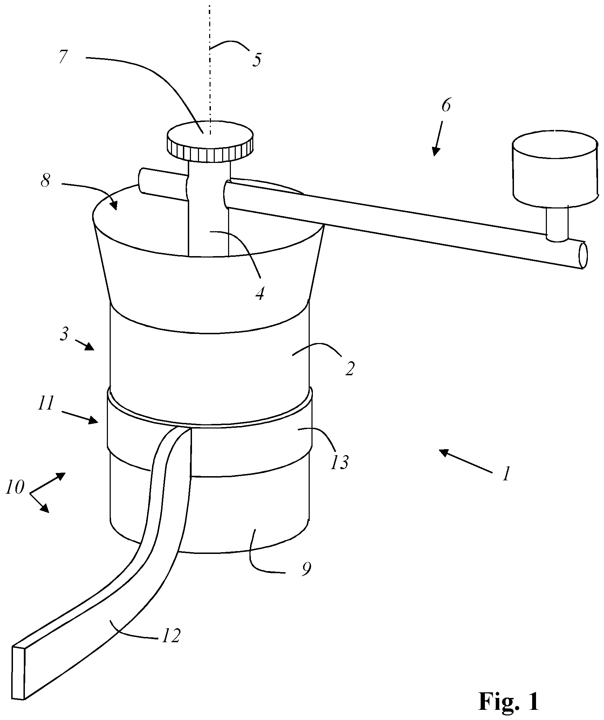

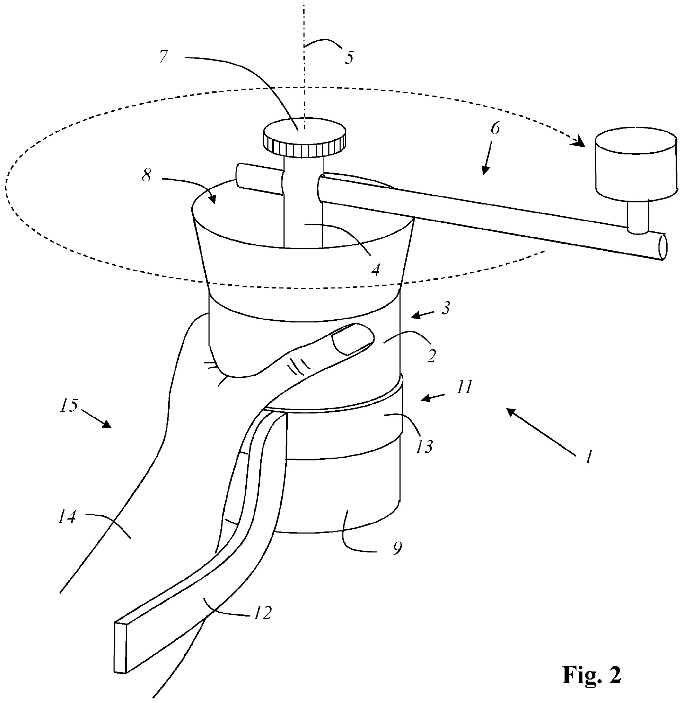

Fig. 1 zeigt ein erstes Ausführungsbeispiel einer erfindungsgemäßen Mühle in einer perspektivischen Ansicht. Die Mühle weist einen Mühlenkörper 1 mit einem Griffbereich 2 auf, der dazu ausgebildet ist, während eines Mahlvorganges mit den Fingern 16 eines Armes 15 gegriffen zu werden, was in Figur 2 dargestellt ist. Der Griffbereich 2 ist an der Außenseite eines Gehäuses 3 des Mühlenkörpers 1 ausgebildet.

Die Mühle weist eine Antriebswelle 4 auf, die um eine Antriebsachse 5 rotierbar gelagert ist. An die Antriebswelle 4 ist eine Handkurbel 6 angekoppelt. Die Mühle beinhaltet ein nicht dargestelltes Mahlwerk. Die Antriebswelle 4 kann drehfest mit einem (nicht dargestellten) Mahlrotor des (nicht dargestellten) Mahlwerks verbunden sein. Die Handkurbel 6 verläuft durch eine Durchgangsbohrung der Antriebswelle 4 und ist mit einer axial angeordneten Klemmschraube 7, die stirnseitig in eine axiale Gewindebohrung der Antriebswelle 4 eingeschraubt ist, relativ zu der Antriebswelle 4 fixiert. Allerdings ist auch andere Arten der Befestigung der Handkurbel 6 möglich.

Das Gehäuse 3 ist rohrförmig ausgebildet, wobei eine Einfüllöffnung 8 für das Mahlgut am oberen Ende ausgebildet ist. Das Gehäuse 3 ist am unteren Ende an einen werkzeugfrei lösbaren Auffangbehälter 9 für das gemahlene Gut angekoppelt.

Die Mühle weist eine Drehmomentabstützvorrichtung 10 auf, die dazu ausgebildet ist, während des Mahlvorganges an einem von den Fingern 16 verschiedenen Teil desselben Armes 15 anzuliegen, was in Figur 2 dargestellt ist.

Die Drehmomentabstützvorrichtung 10 ist zerstörungsfrei abnehmbar an dem Mühlenkörper befestigt. Außerdem sind die Ausrichtung und die Position der Drehmomentabstützvorrichtung 10 relativ zu dem Gehäuse 3 des Mühlenkörpers 1 einstellbar.

Die Drehmomentabstützvorrichtung 10 weist eine Befestigungsvorrichtung 11 zum Befestigen an dem Gehäuse 3 und einen Abstützbügel 12 auf.

Die Befestigungsvorrichtung 11 weist ein Klemmbauteil, nämlich eine Klemmschelle 13, auf, welches das Gehäuse 3 umgibt. Die Klemmschelle 13 hat eine (nicht dargestellte) Spannschraube, mittels der ihr Innendurchmesser veränderbar ist, um die Klemmschelle 13 drehfest an dem Gehäuse 3 zu befestigen. Zwischen der Klemmschelle 13 und dem Gehäuse 3 kann wenigstens ein (nicht dargestelltes) Elastomerbauteil angeordnet sein. Bei dem Elastomerbauteil kann es sich beispielsweise um einen O-Ring handeln. Vorzugsweise sind zwei koaxial angeordnete Elastomerringe, insbesondere O-Ringe, zwischen der Klemmschelle 13 und dem Gehäuse 3 angeordnet.

Der Abstützbügel 12 ist fest an der Klemmschelle 13 befestigt. Bei einem Mahlvorgang liegt der Abstützbügel 12 der Drehmomentabstützvorrichtung 10 an dem Unterarm 14 des Armes 15 an, dessen Finger 16 den Griffbereich 2 gegriffen haben.

Die Mühle ist dazu ausgebildet, von einem Benutzer mit den Fingern 16 einer Hand an dem Griffbereich 2 gehalten zu werden, während der Benutzer mit seiner anderen Hand die Handkurbel 6 betätigen kann.

Der Abstützbügel 12 erstreckt sich im Wesentlichen senkrecht zur Antriebsachse, was es in besonders effizienter Weise ermöglicht, das bei einem Mahlvorgang in die Antriebswelle 4 eingeleitete Drehmoment über die Drehmomentabstützvorrichtung 10 an dem Unterarm 14 des Armes 15 abzustützen.

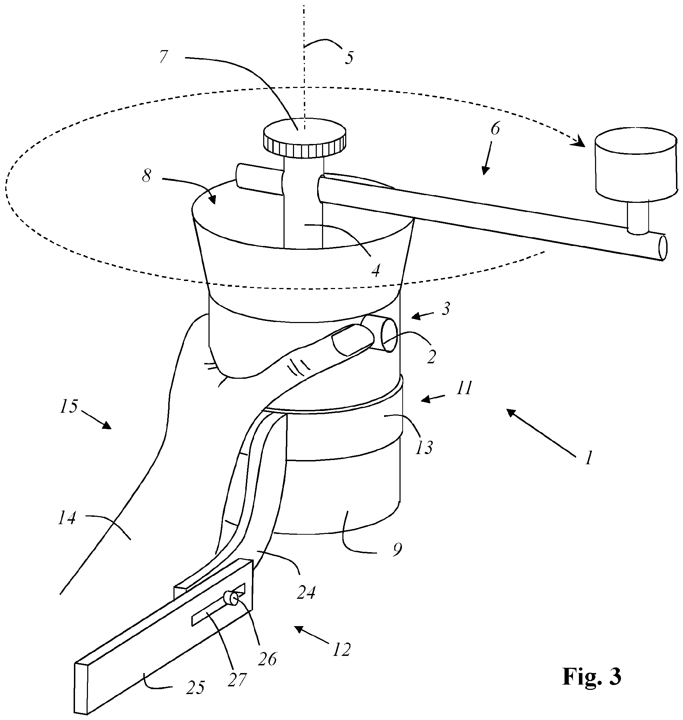

Figur 3 zeigt ein zweites Ausführungsbeispiel einer erfindungsgemäßen Mühle, bei dem der Abstützbügel 12 der Drehmomentabstützvorrichtung 10 in der Länge veränderbar und klappbar ausgebildet ist. Hierzu ist der Abstützbügel 12 zweiteilig ausgebildet, wobei ein erstes Abstützbügelteil 24 fest an der Klemmschelle 13 gefestigt ist und ein zweites Abstützbügelteil 25 mittels einer Klemmschraube, die durch ein Langloch 27 des zweiten Abstützbügelteils 26 verläuft und die in eine (nicht dargestellte) Gewindebohrung des ersten Abstützbügelteils 24 eingeschraubt ist, an dem ersten Abstützbügelteil 24 befestigt ist.

Außerdem ist bei dem zweiten Ausführungsbeispiel einer erfindungsgemäßen Mühle eine weitere Drehmomentabstützvorrichtung 17 vorhanden. Die weitere Drehmomentabstützvorrichtung 17 ist an dem Gehäuse 3 angeordnet und dazu ausgebildet, während des Mahlvorganges an einem der den Griffbereich 2 haltenden Finger 16, nämlich an der Daumenspitze des Daumes der den Griffbereich 2 haltenden Finger 16, anzuliegen.

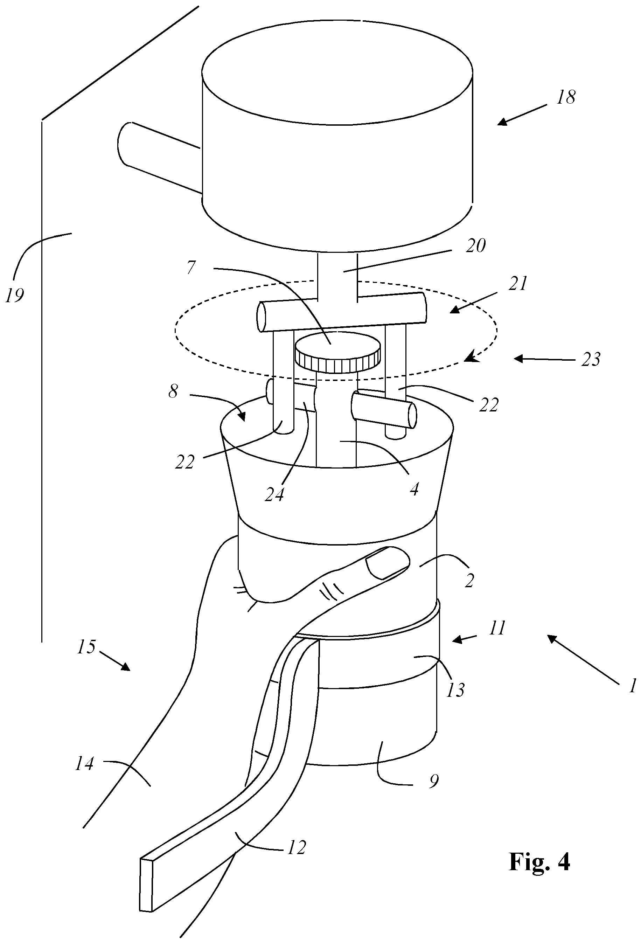

Figur 4 zeigt ein drittes Ausführungsbeispiel einer erfindungsgemäßen Mühle. Bei diesem Ausführungsbeispiel ist eine elektrische Antriebsvorrichtung 18 mit einem (nicht näher dargestellten) elektrischen Antriebsmotor vorhanden, die an einer externen Struktur, nämlich beispielsweise einer Wand 19, befestigt ist. Beispielsweise kann ein Stator der elektrischen Antriebsvorrichtung 18 direkt oder indirekt drehfest mit der externen Struktur verbunden sein, während der Rotor der elektrischen Antriebsvorrichtung 18 eine Abtriebswelle 20 bildet oder triebtechnisch mit einer Abtriebswelle 20 verbunden ist.

Die Abtriebswelle 20 der Antriebsvorrichtung 18 weist treibt eine Gabel 21 mit zwei Zinken 22 zur Rotation an. Die Gabel 21 ist Teil einer Ankoppelvorrichtung 23. Ein weiterer Teil der Ankoppelvorrichtung 23 ist durch einen Mitnehmerbalken 24 gebildet, der durch eine Durchgangsbohrung der Antriebswelle 4 verläuft und mit einer axial angeordneten Klemmschraube 7, die stirnseitig in eine axiale Gewindebohrung der Antriebswelle 4 eingeschraubt ist, relativ zu der Antriebswelle 4 fixiert ist. Im angekoppelten Zustand liegen die Zinken 22 an dem Mitnehmerbalken an, so dass eine Rotationsbewegung von der Abtriebswelle 20 auf die Antriebswelle 4 übertragen werden kann.

Die Antriebsvorrichtung 18 ist derart ausgebildet, dass der Benutzer die Mühle während eines Mahlvorganges an dem Griffbereich 2 frei, insbesondere ohne Abstützung an einer externen Struktur, halten kann, wobei das von der Antriebsvorrichtung 18 über die Ankoppelvorrichtung 23 eingeleitete Drehmoment über die Drehmomentabstützvorrichtung 10 an dem Unterarm 14 des Armes 15 abgestützt wird, dessen Finger 16 den Griffbereich 2 halten.

### Bezugszeichenliste:

- 1: Mühlenkörper
- 2: Griffbereich
- 3: Gehäuse
- 4: Antriebswelle
- 5: Antriebsachse
- 6: Handkurbel
- 7: Klemmschraube
- 8: Einfüllöffnung
- 9: Auffangbehälter
- 10: Drehmomentabstützvorrichtung
- 11: Befestigungsvorrichtung
- 12: Abstützbügel
- 13: Klemmschelle
- 14: Unterarm
- 15: Arm des Benutzers
- 16: Finger
- 17: weitere Drehmomentabstützvorrichtung
- 18: Antriebsvorrichtung
- 19: Wand
- 20: Abtriebswelle
- 21: Gabel
- 22: Zinken
- 23: Ankoppelvorrichtung
- 24: Erstes Abstützbügelteil
- 25: Zweites Abstützbügelteil
- 26: Klemmschraube
- 27: Langloch

## Patentansprüche

1. Mühle mit einem Mühlenkörper (1) und mit einem Griffbereich (2), der dazu ausgebildet ist, während eines Mahlvorganges mit den Fingern (16) eines Armes (15) gegriffen zu werden, **dadurch gekennzeichnet, dass** die Mühle eine Drehmomentabstützvorrichtung (10) aufweist, die dazu ausgebildet ist, während des Mahlvorganges an einem von den Fingern (16) verschiedenen Teil desselben Armes (15) anzuliegen, wobei die Mühle wenigstens eines der folgenden Merkmale a und b aufweist:
a. die Drehmomentabstützvorrichtung (10) ist zerstörungsfrei abnehmbar an dem Mühlenkörper (1) befestigt,
b. die Ausrichtung und/oder die Position der Drehmomentabstützvorrichtung (10) ist relativ zu dem Mühlenkörper (1) einstellbar.

2. Mühle nach Anspruch 1, **dadurch gekennzeichnet, dass**
a. die Drehmomentabstützvorrichtung (10) dazu ausgebildet ist, während des Mahlvorganges wenigstens teilweise am Unterarm (14) des Armes (15) eines erwachsenen Benutzers anzuliegen, oder dass
b. die Drehmomentabstützvorrichtung (10) dazu ausgebildet ist, während des Mahlvorganges wenigstens teilweise an der Handwurzel des Armes (15) eines erwachsenen Benutzers und/oder am Handgelenk des Armes (15) eines erwachsenen Benutzers oder im Mittelhandknochenbereich des Daumens des Armes (15) eines erwachsenen Benutzers anzuliegen.

3. Mühle nach Anspruch 1 oder 2, **dadurch gekennzeichnet, dass** der Mühlenkörper (1) ein Gehäuse (3) aufweist.

4. Mühle nach Anspruch 3, **dadurch gekennzeichnet, dass** die Mühle wenigstens eines der nachfolgenden Merkmale a bis f aufweist:
a. die Drehmomentabstützvorrichtung (10) ist reibschlüssig und/oder formschlüssig an dem Gehäuse (3) befestigt,
b. eine Befestigungsvorrichtung (11) der Drehmomentabstützvorrichtung (10) weist wenigstens ein Klemmbauteil, insbesondere einen Klemmring, oder eine Klemmschelle (13) auf, welches das Gehäuse (3) umgibt,
c. eine Befestigungsvorrichtung (11) der Drehmomentabstützvorrichtung (10) weist wenigstens ein Klemmbauteil auf, wobei zwischen dem Klemmbauteil und dem Gehäuse (3) wenigstens ein Elastomerbauteil, insbesondere ein Elastomerring, angeordnet ist,
d. die Drehmomentabstützvorrichtung (10) ist längenverstellbar ausgebildet
e. die Drehmomentabstützvorrichtung weist in radialer Richtung eine Länge im Bereich von 1 cm bis 25 cm, insbesondere 5 cm bis 25 cm, auf oder ist auf eine Länge im Bereich von 1 cm bis 25 cm, insbesondere 5 cm bis 25 cm, einstellbar,
f. die Drehmomentabstützvorrichtung (10) oder wenigstens einen Teil der Drehmomentabstützvorrichtung (10) ist wahlweise in eine Gebrauchsstellung oder eine Aufbewahrungsstellung, insbesondere durch Ein- bzw. Ausklappen, überführbar.

5. Mühle nach einem der Ansprüche 1 bis 4, **dadurch gekennzeichnet, dass** die Mühle wenigstens eines der nachfolgenden Merkmale a bis h aufweist:
a. das Gehäuse (3) ist zylinderförmig, insbesondere kreiszylinderförmig, ausgebildet,
b. Mühle das Gehäuse (3) ist rohrförmig ausgebildet,
c. das Gehäuse (3) weist eine Einfüllöffnung (8) zum Einfüllen von Mahlgut auf,
d. die Einfüllöffnung (8) ist durch eine obere Rohröffnung gebildet,
e. das Gehäuse (3) weist eine Ausgabeöffnung für das gemahlene Gut auf,
f. die Ausgabeöffnung ist durch eine untere Rohröffnung gebildet,
g. das Gehäuse (3) umgibt einen Aufnahmeraum für das zu mahlende Mahlgut,
h. das Gehäuse (3) weist den Griffbereich (2) auf.

6. Mühle nach einem der Ansprüche 1 bis 5, **dadurch gekennzeichnet, dass** die Mühle eine Antriebswelle (4) aufweist, die um eine Antriebsachse (5) rotierbar gelagert ist.

7. Mühle nach Anspruch 6, **dadurch gekennzeichnet, dass** die Mühle wenigstens eines der nachfolgenden Merkmale a bis c aufweist:
a. die Drehmomentabstützvorrichtung (10) weist einen Abstützbügel (12) oder einen Abstützhebel auf, der sich der Abstützbügel (12) oder Abstützhebel im Wesentlichen senkrecht zur Antriebsachse (5) erstreckt,
b. die Drehmomentabstützvorrichtung (10) ist zur Abstützung eines in die Antriebswelle (4) eingeleiteten Drehmomentes ausgebildet,
c. die Antriebswelle (4) ist einerseits drehfest mit einer, insbesondere als Handkurbel (6) ausgebildeten oder einen elektrischen Antriebsmotor aufweisenden, Antriebsvorrichtung und andererseits drehfest mit einem Mahlrotor, insbesondere einem Mahlkegel, des Mahlwerks verbunden ist.

8. Mühle nach einem der Ansprüche 1 bis 7, **dadurch gekennzeichnet, dass**
a. die Mühle manuell angetrieben ist, und/oder dass
b. die Mühle dazu ausgebildet ist, von einem Benutzer mit den Fingern (16) einer Hand an dem Griffbereich (2) gehalten zu werden, während der Benutzer mit seiner anderen Hand die Handkurbel (6) betätigen kann.

9. Mühle nach einem der Ansprüche 1 bis 8, **dadurch gekennzeichnet, dass**
a. die Mühle eine weitere Drehmomentabstützvorrichtung (17) aufweist, oder dass
b. die Mühle eine weitere Drehmomentabstützvorrichtung (17) aufweist, die dazu ausgebildet und angeordnet ist, während des Mahlvorganges an einem der den Griffbereich (2) haltenden Finger (16), insbesondere an dem Daumen oder der Daumenspitze der den Griffbereich (2) haltenden Finger, anzuliegen.

10. Mühle nach einem der Ansprüche 1 bis 9, **dadurch gekennzeichnet, dass**
a. die Mühle als Kaffeemühle ausgebildet ist, oder dass
b. die Mühle als Gewürzmühle ausgebildet ist.

11. Drehmomentabstützvorrichtung (10) zum Bilden einer Mühle nach einem der Ansprüche 1 bis 10.

12. Drehmomentabstützvorrichtung (10) nach Anspruch 11, **dadurch gekennzeichnet, dass** die Drehmomentabstützvorrichtung (10) eine Befestigungsvorrichtung (11) zum Befestigen an dem Mühlenkörper (1), insbesondere an einem Gehäuse (3) des Mühlenkörpers (1) aufweist.

13. Drehmomentabstützvorrichtung (10) nach Anspruch 12, **dadurch gekennzeichnet, dass**
a. die Befestigungsvorrichtung (11) wenigstens ein Klemmbauteil, insbesondere einen Klemmring, oder eine Klemmschelle (13) aufweist, welches dazu ausgebildet ist, das Gehäuse (3) der Mühle zu umgeben, oder dass
b. die Befestigungsvorrichtung (11) wenigstens ein Klemmbauteil, insbesondere einen Klemmring, oder eine Klemmschelle (13) aufweist, welches dazu ausgebildet ist, das Gehäuse (3) der Mühle zu umgeben, und dass die Befestigungsvorrichtung (11) ein Elastomerbauteil, insbesondere einen Elastomerring, aufweist, der dazu ausgebildet ist, zwischen dem Klemmbauteil und dem Gehäuse (3) angeordnet zu sein.

14. Drehmomentabstützvorrichtung (10) nach einem der Ansprüche 11 bis 13, **dadurch gekennzeichnet, dass** die Drehmomentabstützvorrichtung (10) einen Abstützbügel (12) oder einen Abstützhebel aufweist.

15. Drehmomentabstützvorrichtung (10) nach einem der Ansprüche 11 bis 14, **dadurch gekennzeichnet, dass** die Drehmomentabstützvorrichtung (10) längenverstellbar ausgebildet ist.
